# EUROPÄISCHE PATENTSCHRIFT

(11) **EP 2 075 079 B1**
(45) Veröffentlichungstag und Bekanntmachung des Hinweises auf die Patenterteilung: **08.01.2014**
(21) Anmeldenummer: 08020548.7
(22) Anmeldetag: 26.11.2008
(51) Int. Cl.: B23D 49/16, B27B 9/02

(54) **Bearbeitungsmaschine**
Machining unit
Machine de traitement

(30) Priorität: 24.12.2007 DE 102007062676
(43) Veröffentlichungstag der Anmeldung: 01.07.2009
(73) Patentinhaber: Mafell AG, 78727 Oberndorf a.N. (DE)
(72) Erfinder: Kiefer, Tobias, 72160 Horb-Talheim (DE); Lauckner, Helmut, 72172 Sulz a.N. (DE); Zimmermann, Horst, 72160 Horb-Betra (DE)
(74) Vertreter: Manitz, Finsterwald & Partner GbR

(56) Entgegenhaltungen:
- WO-A1-02/057042
- US-A- 2 887 910
- US-A- 2 949 944

## Beschreibung

Die Erfindung betrifft eine elektrische Bearbeitungsmaschine gemäß dem Oberbegriff des Patentanspruchs 1, insbesondere Handkreissäge, Stichsäge oder Oberfräse, mit einer Basiseinheit, einer das Werkzeug umfassenden, relativ zur Basiseinheit verschwenkbaren Arbeitseinheit, und einer Spanneinrichtung, mit der die Arbeitseinheit zur, insbesondere stufenlosen, Einstellung des Schwenkwinkels an der Basiseinheit fixierbar ist und die wenigstens zwei längs der Schwenkachse beabstandete Spannbereiche umfasst, an denen jeweils die Basiseinheit und die Arbeitseinheit miteinander verspannbar sind.

Eine derartige Bearbeitungsmaschine geht beispielsweise aus der US 2 887 910 hervor.

Derartige Bearbeitungsmaschinen sind grundsätzlich bekannt. Dabei ist es aus Stabilitätsgründen wünschenswert, zwei längs der Schwenkachse mit Abstand voneinander angeordnete Spannbereiche vorzusehen. Dies erhöht allerdings den Bedienaufwand beim Verändern des Schwenkwinkels, da zunächst an beiden Spannbereichen die Verspannung gelöst, dann die Arbeitseinheit relativ zur Basiseinheit verschwenkt und anschließend erneut an beiden Spannbereichen die Verspannung wieder hergestellt werden muss, wobei jeder Spannbereich für sich zu betätigen ist. Das Verspannen mittels zweier unabhängiger Spannbereiche vermindert aufgrund dieser Vielzahl von Arbeitsschritten nicht nur den Bedienkomfort, sondern kann auch zu Ungenauigkeiten führen, wenn die Verspannung an den beiden Spannbereichen nicht exakt bei der gleichen Schwenkstellung der Arbeitseinheit relativ zur Basiseinheit hergestellt wird. Des Weiteren wird in der Praxis oft vergessen, nach dem Betätigen des einen Spannbereiches auch an dem anderen Spannbereich die Verklemmung herzustellen, so dass versehentlich mit einer nur einseitig fixierten Arbeitseinheit gearbeitet wird, was sich ebenfalls nachteilig auf die Arbeitsgenauigkeit auswirkt.

In der US 2 887 910 A ist eine Standbohrmaschine offenbart, deren Maschinenteil gegenüber dem Standfuß verschwenkt werden kann. Das Sichern des Maschinenteils in einer bestimmten Schwenkstellung erfolgt mittels einer Klemmeinrichtung, welche zwei gegenüberliegend angeordnete Konus-Elemente umfasst. Durch Betätigen eines Hebels können die beiden Konus-Elemente aufeinander zu bewegt und so in einen festen Klemmsitz gebracht werden.

Bei der in der US 2 949 944 A offenbarten Stichsäge kann die Auflageplatte gegenüber dem Maschinenteil 5 verschwenkt werden, wobei zum Fixieren der Maschine in einer bestimmten Schwenkstellung eine Feststellschraube vorgesehen ist, welche auf die beiden Schenkel eines U-förmigen Bügels der Auflageplatte einwirkt.

In der WO 02/057042 A1 ist eine Stichsäge offenbart, bei welcher an der Unterseite des Maschinengehäuses eine Anordnung aus Längsnuten vorgesehen ist. In diese Längsnuten können Haken der Anlageplatte eingreifen, um so das Maschinenteil gegenüber der Anlageplatte zu fixieren. Zum Lösen der Verbindung können die Haken verschoben werden.

Aufgabe der Erfindung ist es, eine Möglichkeit zu schaffen, das Einstellen unterschiedlicher Schwenkwinkel zu vereinfachen und gleichzeitig das Auftreten von Ungenauigkeiten bei der Schwenkwinkeleinstellung sicher zu vermeiden.

Die Lösung dieser Aufgabe erfolgt durch die Merkmale des Anspruchs 1.

Die Spanneinrichtung einer erfindungsgemäßen Bearbeitungsmaschine umfasst eine gemeinsame Betätigungseinrichtung für die Spannbereiche, mit der an den Spannbereichen jeweils eine Spannkraft zum Verspannen von Basiseinheit und Arbeitseinheit erzeugbar ist.

Hierdurch ist es für einen Benutzer möglich, mit einer einzigen Betätigungseinrichtung an beiden Spannbereichen die Verspannung zu lösen und nach dem Einstellen des gewünschten Schwenkwinkels wieder herzustellen. Die Bedienung der Spanneinrichtung wird folglich wesentlich vereinfacht. Gleichzeitig ist auch eine hohe Einstellgenauigkeit sichergestellt, da es nicht passieren kann, dass die Verspannung an den beiden Spannbereichen versehentlich bei auch nur geringfügig unterschiedlichen Schwenkwinkeln erfolgt.

Erfindungsgemäß ist vorgesehen, dass der eine Spannbereich vor der Arbeitseinheit, insbesondere im Bereich des vorderen Maschinenendes, und der andere Spannbereich hinter der Arbeitseinheit, insbesondere im Bereich des hinteren Maschinenendes, angeordnet ist. Hierdurch wird eine hohe Stabilität der Maschine im Sinne eines sicheren Haltes der verschwenkten Arbeitseinheit an der Basiseinheit gewährleistet.

Mögliche Weiterbildungen der Erfindung sind auch in den abhängigen Ansprüchen, der Beschreibung sowie der Zeichnung angegeben.

Es ist bevorzugt, wenn mittels der Betätigungseinrichtung die Verspannung zwischen Basiseinheit und Arbeitseinheit an beiden Spannbereichen gleichzeitig herstellbar und gleichzeitig lösbar ist. Die Genauigkeit der Schwenkwinkeleinstellung ist hierdurch in besonders zuverlässiger Weise gewährleistet.

Ferner wird vorgeschlagen, dass eine die Spannbereiche miteinander verbindende Übertragungseinrichtung vorgesehen ist, wobei die Betätigungseinrichtung an dem einen Spannbereich angeordnet ist und über die Übertragungseinrichtung mit dem anderen Spannbereich zusammenwirkt. Hierdurch wird in einer die Bedienung besonders vereinfachenden Weise eine einseitige Betätigung beider Spannbereiche ermöglicht. Insbesondere kann die Betätigungseinrichtung, beispielsweise eine Spannschraube, in einer für den Benutzer gewohnten Weise wie bisher an einem der beiden Spannbereiche, z.B. am vorderen Spannbereich, angeordnet werden, wobei - anders als bisher - zusätzlich die Übertragungseinrichtung für die Verspannung am anderen Spannbereich sorgt.

Vorzugsweise ist an dem einen Spannbereich mittels der Betätigungseinrichtung zusätzlich zu der Spannkraft eine Stellbewegung erzeugbar. Diese Stellbewegung kann dazu genutzt werden, den anderen Spannbereich zu betätigen, indem sie an den anderen Spannbereich übertragen wird und dort eine Spannkraft erzeugt.

Im Rahmen der Erfindung werden insbesondere zwei generelle Grundkonzepte vorgeschlagen, denen gemeinsam ist, dass die an den Spannbereichen erforderlichen Spannkräfte durch Betätigen einer einzigen Betätigungseinrichtung aufgebracht werden, insbesondere in für den Benutzer gewohnter Weise durch Drehen einer Spannschraube.

Die Konzepte unterscheiden sich aber insbesondere dadurch voneinander, dass in dem einen Fall ein von der Betätigungseinrichtung betätigtes Spannorgan, das die Spannkraft an dem einen Spannbereich erzeugt, außerdem ein Spannorgan an dem anderen Spannbereich beaufschlagt. Die Spannbereiche sind insofern also bezüglich der Betätigungseinrichtung in Reihe geschaltet. Hierbei wird in vorteilhafter Weise das Prinzip ausgenutzt, dass sich die in Reihe geschalteten Spannbereiche bzw. die an den Spannbereichen wirkenden Spannkräfte gegenseitig derart ausgleichen, dass überall die bestimmungsgemäße Spannkraft auch tatsächlich wirksam ist. Insbesondere ist keine eine bestimmungsgemäße Funktion überhaupt erst ermöglichende Abstimmung des Gesamtsystems erforderlich.

In dem anderen Fall geht die Betätigung der an den Spannbereichen zum Erzeugen der Spannkraft vorgesehenen Spannorgane jeweils unmittelbar vom Betätigungsorgan und/oder einer Relativbewegung zwischen Arbeitseinheit und Basiseinheit aus, d.h. das eine Spannorgan dient nicht gleichzeitig zum Beaufschlagen des anderen Spannorgans. Die Spannbereiche sind hier insofern also bezüglich der Betätigungseinrichtung parallel geschaltet.

In einem Ausführungsbeispiel ist vorgesehen, dass die Spannbereiche hinsichtlich ihrer die Spannkraft erzeugenden Komponenten zumindest im Wesentlichen baugleich ausgeführt sind und insbesondere baugleiche Spannorgane aufweisen. Hierdurch wird erreicht, dass an beiden Spannbereichen zumindest im Wesentlichen die gleiche Spannkraft erzeugt werden kann. Durch das Vorsehen baugleicher Komponenten lassen sich außerdem die Herstellungskosten reduzieren.

Ferner wird vorgeschlagen, dass die Spannbereiche zum Aufbringen der Spannkraft jeweils einen Hebel umfassen, wobei die Hebel derart angeordnet sind, dass zu jedem Zeitpunkt an den Hebeln zumindest im Wesentlichen die gleichen Kraftverhältnisse herrschen. Eine derartige Hebelanordnung eignet sich auch deshalb besonders gut für die Integration in eine Bearbeitungsmaschine, da mittels derartiger Hebel eine Kraftübertragung von der gewohnten Lage der Spannbereiche oberhalb der Grundplatte auf ein Niveau in Höhe der Grundplatte relativ einfach möglich ist. Dies ist vorteilhaft, da sich ein Übertragungsorgan zur Koppelung der beiden Spannbereiche, beispielsweise ein Zugdraht, in die Grundplatte integrieren bzw. im Bereich der Grundplatte verlegen lässt. Ferner können bei einem Einsatz von Hebeln die Kräfteverhältnisse auch bei Verwendung baugleicher Komponenten in einfacher Weise entsprechend den jeweiligen Anforderungen abgestimmt werden, indem die Anordnung der Hebel und/oder die Lage der Kraftangriffspunkte entsprechend gewählt werden, wobei gleich große Spannkräfte an den Spannbereichen nicht zwingend sind.

In einem weiteren Ausführungsbeispiel umfasst der eine Spannbereich ein, insbesondere als Hebel ausgebildetes, Spannorgan, an dem die Betätigungseinrichtung angreift, wobei eine von der Betätigungseinrichtung auf das Spannorgan aufgebrachte Betätigungskraft und eine vom Spannorgan auf die Arbeitseinheit oder die Basiseinheit aufgebrachte Spannkraft entgegengesetzt gerichtet und parallel versetzt sind. Mit einem derartigen Parallelversatz der Kraftwirkungslinien kann insbesondere eine Verdrehung, Verkippung und/oder elastische Verformung des Spannorgans realisiert werden, um auf diese Weise mittels des Spannorgans sowohl die Spannkraft aufzubringen als auch für die Stellbewegung zum Beaufschlagen des anderen Spannbereiches zu sorgen.

Des Weiteren wird erfindungsgemäß vorgeschlagen, dass das Spannorgan einen Spannabschnitt zum Aufbringen der Spannkraft und einen mit der Übertragungseinrichtung verbundenen Übertragungsabschnitt zum Ausführen der Stellbewegung umfasst, wobei ein Angriffsabschnitt des Spannorgans, an dem die Betätigungseinrichtung angreift, in Bezug auf eine Richtung senkrecht zur, insbesondere parallel zur Schwenkachse verlaufenden, Angriffsrichtung der Betätigungseinrichtung zwischen dem Spannabschnitt und dem Übertragungsabschnitt angeordnet ist.

Die Stellbewegung des Übertragungsabschnitts kann unter elastischer Verformung des Spannorgans erfolgen.

Insbesondere umfasst das Spannorgan einen mit einer Spannschraube zusammenwirkenden, insbesondere an einem separaten, drehfest angebrachten Mutterelement oder am Spannorgan selbst ausgebildeten, Gewindeabschnitt, wobei ein mit Abstand von der Mittelachse des Gewindeabschnitts angeordneter Spannabschnitt des Spannorgans die Basiseinheit oder die Arbeitseinheit unmittelbar beaufschlagt.

In einer weiteren Ausführung der Erfindung ist vorgesehen, dass der Spannabschnitt des Spannorgans die Basiseinheit oder die Arbeitseinheit unmittelbar beaufschlagt, während zwischen dem Angriffsabschnitt des Spannorgans und der Basiseinheit bzw. der Arbeitseinheit ein Zwischenraum vorhanden ist. Ein derartiger Zwischenraum ermöglicht insbesondere eine elastische Verformung des Spannorgans zur gleichzeitigen Erzeugung der Spannkraft und der Stellbewegung.

In einer alternativen Ausgestaltung der Erfindung können - wie bereits erwähnt - die beiden Spannbereiche bezüglich der Betätigungseinrichtung in Reihe geschaltet sein.

Insbesondere ist erfindungsgemäß vorgesehen, dass der eine Spannbereich ein Spannorgan umfasst, an dem die Betätigungseinrichtung angreift und das die Spannkraft aufbringt, wobei eine Stellbewegung für den anderen Spannbereich unter Umgehung des Spannorgans von der Betätigungseinrichtung und/oder von einer Relativbewegung zwischen Arbeitseinheit und Basiseinheit abgeleitet wird.

Beispielsweise kann erfindungsgemäß vorgesehen sein, dass der eine Spannbereich ein, insbesondere als mit der Spannschraube verschraubtes Mutterelement ausgebildetes, Spannorgan umfasst, an dem die Betätigungseinrichtung angreift, wobei eine von der Betätigungseinrichtung auf das Spannorgan aufgebrachte Betätigungskraft und eine vom Spannorgan auf die Arbeitseinheit oder die Basiseinheit aufgebrachte Spannkraft entgegengesetzt gerichtet sind und auf einer gemeinsamen Geraden liegen. Insbesondere umfasst das Spannorgan ein mit der Spannschraube verschraubtes Mutterelement, das die Spannkraft auf die Basiseinheit oder die Arbeitseinheit aufbringt.

Die Verspannung an diesem Spannbereich erfolgt hierbei in prinzipiell bekannter Weise durch eine Schraube-/ Mutter-Verbindung oder durch andere, an sich grundsätzlich bekannte Spannvorrichtungen, wobei nun aber bevorzugt zusätzliche Mittel vorgesehen sind, um mittels der Spannschraube auch den anderen Spannbereich betätigen zu können.

Vorzugsweise umfasst der eine Spannbereich zusätzlich zu dem Spannorgan ein, insbesondere als Hebel ausgebildetes, Stellorgan, das mit der Betätigungseinrichtung, insbesondere einer Spannschraube, zusammenwirkt und die Stellbewegung ausführt.

Des Weiteren wird vorgeschlagen, dass eine Einstellvorrichtung vorgesehen ist, mit der zumindest an einem Spannbereich die Übertragungseinrichtung einstellbar ist. Hierdurch können die beiden Spannbereiche aufeinander abgestimmt werden, um eine bestimmungsgemäße Spannwirkung an beiden Spannbereichen zu gewährleisten.

Gemäß einer weiteren Ausführungsform der Erfindung wird vorgeschlagen, dass zumindest ein Bestandteil der Übertragungseinrichtung lediglich zur Übertragung einer Zugkraft ausgebildet ist.

Insbesondere umfasst die Übertragungseinrichtung eine, insbesondere dünne, Stange oder einen Draht. Ein solches Übertragungsorgan lässt sich aufgrund seines geringen Platzbedarfes problemlos in eine Bearbeitungsmaschine integrieren, insbesondere in eine Grundplatte oder in einen Bereich in der Nähe der Grundplatte.

Wie vorstehend erwähnt, kann die Betätigungseinrichtung eine Spannschraube umfassen, wobei bevorzugt die Drehachse der Spannschraube parallel zur Schwenkachse verläuft. Alternativ ist es auch möglich, andere, ebenfalls für sich genommen grundsätzlich bekannte Einrichtungen zum Betätigen der Spanneinrichtung vorzusehen, z.B. eine Exzenteranordnung, eine Hebelanordnung oder eine Anordnung mit einem oder mehreren einzutreibenden Keilen, um dem Benutzer das Aufbringen der Spannkraft zu ermöglichen.

Die Erfindung wird im Folgenden beispielhaft unter Bezugnahme auf die Zeichnung beschrieben. Es zeigen:
- Fig. 1: schematisch eine Seitenansicht eines eine erfindungs- gemäße Spanneinrichtung umfassenden Bereiches einer Bearbeitungsmaschine gemäß einer Ausführungsform der Erfindung, und
- Fig. 2 und 2a: schematisch eine Seitenansicht eines eine erfindungs- gemäße Spanneinrichtung umfassenden Bereiches einer Bearbeitungsmaschine gemäß einer weiteren Ausführ- ungsform der Erfindung, wobei Fig. 2a eine mögliche konkrete Ausgestaltung des einen Spannbereiches zeigt.

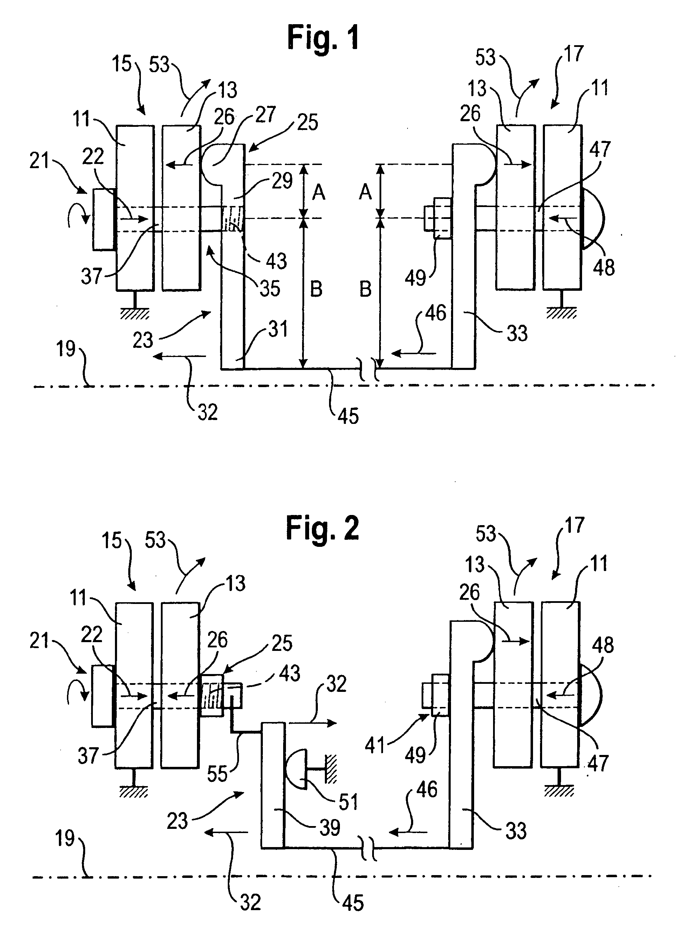

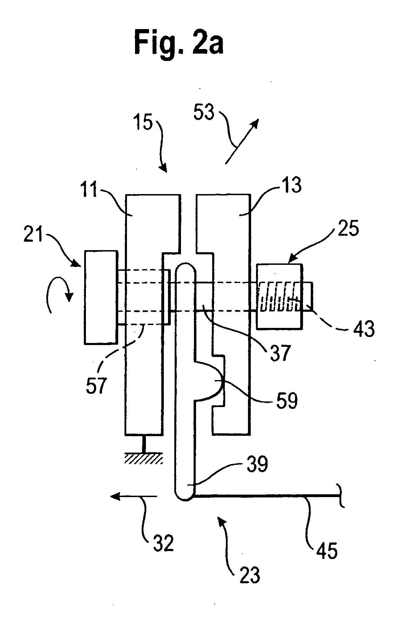

Im Einleitungsteil wurde bereits erwähnt, dass die Erfindung insbesondere zwei generelle Grundkonzepte vorschlägt: Fig. 1 zeigt ein Beispiel für in Reihe geschaltete Spannbereiche 15, 17, während in dem Ausführungsbeispiel der Fig. 2 die Spannbereiche 15, 17 parallel geschaltet sind. Auf die konstruktiven Besonderheiten dieser beiden Konzepte wird nachstehend näher eingegangen.

Beiden Ausführungsbeispielen ist gemeinsam, dass an jedem Spannbereich 15, 17 beispielsweise einer Handkreissäge eine gemeinsam mit dem Sägeblatt (nicht dargestellt) und einer Antriebseinheit (nicht dargestellt) für das Sägeblatt um eine Achse 19 verschwenkbare Arbeitseinheit 13, von der hier lediglich an jedem Spannbereich 15, 17 ein Schwenksegment dargestellt ist, an einer maschinenfesten Basiseinheit 11 fixierbar ist, um auf diese Weise einen jeweils gewünschten Schwenkwinkel und damit einen bestimmten Neigungswinkel des Sägeblatts relativ zur Basiseinheit 11 einzustellen. Die Schwenkbewegung der Arbeitseinheit 13 ist durch Pfeile 53 angedeutet.

Ferner stimmen die beiden Ausführungsbeispiele darin überein, dass der in den Figuren rechte Spannbereich 17, der an der Maschine beispielsweise den hinteren Spannbereich bildet, einen als Spannorgan dienenden Hebel 33 umfasst, der zwischen dem Schwenksegment 13 und einem Mutterelement 49 gehalten ist, das mit einer Halteschraube 47 verschraubt ist, die sich mit ihrem Kopf an der Basiseinheit 11 abstützt. Der Hebel 33 erstreckt sich senkrecht zur Schwenkachse 19 und zur Längsachse der Halteschraube 47. Die Angriffspunkte am Hebel 33 sind entlang dessen Längsachse beabstandet, so dass der Hebel 33 um das Mutterelement 49 gedreht bzw. verkippt werden kann und/oder eine elastische Verformung des Hebels 33 möglich ist, wenn ein entsprechendes Moment auf den Hebel 33 einwirkt.

Durch Betätigen des Hebels 33, worauf nachstehend näher eingegangen wird, wirkt parallel zur Schwenkachse 19 eine Zugkraft 46 auf das eine Ende des Hebels 33, so dass der Hebel 33 mit seinem anderen Ende - gegebenenfalls unter elastischer Verformung - eine Spannkraft 26 auf das Schwenksegment 13 aufbringen kann, welches somit zwischen der Basiseinheit 11 und dem Hebel 33 eingeklemmt wird. Der Hebel 33 wird hierbei durch die die entsprechende Gegenkraft 48 aufbringende Halteschraube 47 in einem Bereich zwischen seinen beiden Enden festgehalten.

Des Weiteren wird in beiden Ausführungsbeispielen die Zugkraft 46 auf den in den Figuren rechten Spannbereich 17 mittels eines parallel zur Schwenkachse 19 verlaufenden Drahtes 45 aufgebracht, der Bestandteil einer Übertragungseinrichtung 23 ist, welche die beiden Spannbereiche 15, 17 miteinander verbindet und über welche eine Betätigungseinrichtung 21, die am linken Spannbereich 15 angeordnet ist, mit dem rechten Spannbereich 17 zusammenwirkt. Durch Drehen einer Spannschraube 37 kann ein Benutzer die Verspannung gleichzeitig an beiden Spannbereichen 15, 17 sowohl herstellen als auch lösen.

Der Aufbau und die Funktionsweise der Betätigungseinrichtung 21 sowie die Art und Weise der Beaufschlagung des Drahtes 45 sind in den beiden Ausführungsbeispielen verschieden. Gemäß Fig. 1 sind die Spannbereiche 15, 17 bezüglich der Spannschraube 37 in Reihe geschaltet, während gemäß Fig. 2 eine Parallelschaltung realisiert ist.

In dem Ausführungsbeispiel der Fig. 1 wirkt die Spannschraube 37 mit einem als Hebel ausgebildeten, mit dem Hebel 33 des rechten Spannbereiches 17 baugleichen Spannorgan 25 zusammen, das einen Spannabschnitt 27, einen Angriffsabschnitt 29 sowie einen Übertragungsabschnitt 31 umfasst, wobei diese Abschnitte 27, 29, 31 längs des Hebels 25 beabstandet sind. Der Hebel 25 erstreckt sich senkrecht zur Schwenkachse 19 und somit ebenfalls senkrecht zur Längserstreckung der Spannschraube 37. Es ist möglich, aber nicht zwingend, dass der Hebel 25 des einen Spannbereiches 15 sich parallel zum Hebel 33 des anderen Spannbereiches 17 erstreckt. Die herrschenden Kraftverhältnisse sind jedoch von einer Verdrehung der beiden Hebel 25, 33 um eine mit dem Draht 45 zusammenfallende Achse unabhängig. Dies kann gegebenenfalls zur einfacheren Integration der Spanneinrichtung in eine Maschine ausgenutzt werden.

Am Übertragungsabschnitt 31 ist der Zugdraht 45 befestigt. Der hier einen Vorsprung umfassende Spannabschnitt 27 beaufschlagt mit diesem Vorsprung unmittelbar das Schwenksegment 13, um eine Spannkraft 26 aufzubringen. Der Angriffsabschnitt 29 umfasst einen Gewindeabschnitt 43, mit dem die Spannschraube 37 zusammenwirkt, um eine Betätigungskraft 22 aufzubringen. Der Gewindeabschnitt 43 ist z.B. in einer Vierkantmutter ausgebildet, die drehfest in den Hebel 25 eingelegt ist. Die Spannkraft 26 und die Betätigungskraft 22 sind entgegengesetzt gerichtet und verlaufen in einem Abstand A voneinander. Die Mittelachse der Spannschraube 37 und der Zugdraht 45 verlaufen in einem Abstand B voneinander.

Diese Abstände A und B finden sich entsprechend an dem Hebel 33 des rechten Spannbereiches 17 wieder, so dass aufgrund der Baugleichheit der beiden Hebel 25, 33 an beiden Spannbereichen 15, 17 die gleichen geometrischen Bedingungen und somit die gleichen Kraftverhältnisse herrschen. Ohne Änderung des prinzipiellen Aufbaus und der grundsätzlichen Funktionsweise können die Abstände A, B aber auch anders und insbesondere in den beiden Spannbereichen 15, 17 auch unterschiedlich groß gewählt werden.

Wird die Spannschraube 37 vom Benutzer in Spannrichtung gedreht, wird der Hebel 25 nach links gegen das Schwenksegment 13 gezogen, welches dadurch mittels des Spannabschnitts 27 des Hebels 25 gegen die Basiseinheit 11 gedrückt wird, um die gewünschte Verspannung herzustellen. Je nach Ausgangsstellung kann somit eine Relativbewegung zwischen Schwenksegment 13 und Basiseinheit 11 parallel zur Schwenkachse 19 erfolgen, mit der ein vorhandener Zwischenraum geschlossen wird, bevor das Schwenksegment 13 und die Basiseinheit 11 unmittelbar aneinander anliegen. Nach Erreichen dieses "Blockierzustands" kann die Spannschraube 37 noch weiter gedreht werden, um die Klemmkraft zu erhöhen.

Da unterhalb des Spannabschnitts 27 ein Zwischenraum 35 zwischen dem Hebel 25 und dem Schwenksegment 13 vorhanden ist, kann der Hebel 25 mit seinem Übertragungsabschnitt 31 die Betätigungsbewegung der Spannschraube 37 über den erwähnten "Blockierzustand" hinaus unter Weiterbewegung des Übertragungsabschnitts 31 an den Zugdraht 45 und somit an den Hebel 33 des hinteren Spannbereiches 17 weitergeben.

Diese Anordnung macht sich folglich das einer Reihenschaltung zugrunde liegende Prinzip zunutze, wonach sich die in Reihe geschalteten Hebel 25, 33 der Spannbereiche 15, 17 bzw. die wirksamen Spannkräfte 26 so ausgleichen oder "auspendeln", dass an den Spannbereichen 15, 17 jeweils die bestimmungsgemäße Spannkraft 26 auch tatsächlich wirksam ist. Eine die bestimmungsgemäße Funktion überhaupt erst ermöglichende Abstimmung des Gesamtsystems ist nicht erforderlich. Insbesondere ist diese Reihenschaltung von einem Blockierzustand zwischen Arbeitseinheit 13 und Basiseinheit 11 unabhängig, d.h. eine Relativbewegung zwischen Arbeitseinheit 13 und Basiseinheit 11 am vorderen Spannbereich 15 ist zur Beaufschlagung des hinteren Spannbereiches 17 nicht erforderlich.

Da die Hebelanordnungen in beiden Spannbereichen 15, 17 hinsichtlich der wirksamen Kräfte baugleich ausgeführt sind, sind die Spannkräfte 26 in den beiden Spannbereichen 15, 17 gleich groß, wobei dies - wie gesagt - aber nicht zwingend ist.

In den Ausführungsbeispielen der Fig. 2 und 2a ist als Spannorgan 25 ein herkömmliches Mutterelement vorgesehen, welches gemäß der üblichen Wirkungsweise einer Schraube-/Mutter-Verbindung die Basiseinheit 11 und die Arbeitseinheit 13 an dem einen Spannbereich 15 miteinander verspannt. Das Spannorgan 25 ist mit einem als Hebel ausgebildeten Stellorgan 39 parallel geschaltet, das an einem ersten Endbereich mit dem Zugdraht 45 zur Betätigung des anderen Spannbereiches 17 verbunden ist.

Das Stellorgan 39 stützt sich in einem zwischen den freien Endbereichen gelegenen Bereich an einem Lager 51 ab und ist an seinem zweiten Endbereich zur Ausübung einer Stellbewegung 32 beaufschlagbar. Die hieraus resultierende Dreh- oder Kippbewegung des Hebels 39 um das Lager 51 und/oder eine elastische Verformung des Hebels 39 sorgt für die erforderliche Zugkraft zur Beaufschlagung des Hebels 33 des anderen Spannbereiches 17.

Anders als in dem Beispiel der Fig. 1 wird hier der Hebel 39 nicht von dem Spannorgan 25 beaufschlagt, sondern aufgrund der hier vorgesehenen Parallelschaltung wird die Betätigung des Stellorgans 39 von der Betätigungseinrichtung 21 und/oder von einer mittels der Betätigungseinrichtung 21 hervorgerufenen Relativbewegung zwischen Basiseinheit 11 und Arbeitseinheit 13 abgeleitet. Rein schematisch ist hierzu in Fig. 2 zwischen der Betätigungseinrichtung 21 und dem Stellorgan 39 eine Kopplungseinrichtung 55 dargestellt.

Aufgrund der Parallelschaltung ist eine Abstimmung des Gesamtsystems erforderlich, die insbesondere eine ungleiche Verspannung an den beiden Spannbereichen 15, 17 verhindert.

In dem konkreten Ausführungsbeispiel der Fig. 2a ist das Stellorgan 39 ein insbesondere zur Minimierung des Platzbedarfes teilweise zwischen der Basiseinheit 11 und der Arbeitseinheit 13 angeordneter Hebel, dessen erster Endbereich wiederum mit dem Zugdraht 45 verbunden ist. Fig. 2a zeigt lediglich den die Spannschraube 37 umfassenden Spannbereich 15. Der andere Spannbereich 17 entspricht dem der Fig. 2.

An seinem zweiten Endbereich, durch den sich die Spannschraube 37 hindurch erstreckt, wirkt der Hebel 39 mit dem einen Ende einer Hülse 57 zusammen, die axial relativ zur Spannschraube 37 frei beweglich über die Spannschraube 37 geschoben ist und mit ihrem anderen Ende mit dem Kopf oder einer Unterlegscheibe der Spannschraube 37 zusammenwirkt. Die axiale Länge der Hülse 57 bestimmt, wie nahe der Hebel 39 an der Arbeitseinheit 13 liegt, wenn die Arbeitseinheit 13 und die Basiseinheit 11 aneinander anliegen, d.h. der vorstehend bereits erwähnte "Blockierzustand" erreicht ist.

Während die Hülse 57 danach strebt, den Hebel 39 in Richtung der Arbeitseinheit 13 zu drücken, strebt die Arbeitseinheit 13 danach, den Hebel 39 über einen in diesem Beispiel am Hebel 39 ausgebildeten Vorsprung 59 in die entgegengesetzte Richtung, d.h. in Richtung der Basiseinheit 11, zu drücken. Aufgrund der längs des Hebels 39 beabstandeten Angriffspunkte wird der Hebel 39 verdreht bzw. gekippt, gegebenenfalls unter elastischer Verformung, wodurch die Stellbewegung 32 erzeugt und auf den Draht 45 eine Zugkraft zur Betätigung des anderen Spannbereiches 17 ausgeübt wird.

Eine Betätigung des anderen Spannbereiches 17 ist aber nicht mehr möglich, sobald durch Anliegen der Arbeitseinheit 13 an der Basiseinheit 11 der Blockierzustand erreicht ist. Die Spannkraft am Spannbereich 15 lässt sich zwar durch Weiterdrehen der Stellschraube 37 erhöhen. Eine Erhöhung der Spannkraft am anderen Spannbereich 17 ist damit aber nicht mehr verbunden, da hierzu eine Relativbewegung zwischen Arbeitseinheit 13 und Basiseinheit 11 am Spannbereich 15 notwendig ist, denn nur eine solche Relativbewegung ist in der Lage, die für die Stellbewegung 32 erforderliche Auslenkung des Hebels 39 zu sorgen.

Folglich muss die Hülse 57 derart, d.h. so lang, bemessen werden, dass eine ausreichende Verspannung auch des anderen Spannbereiches 17 sichergestellt ist, bevor der die Spannschraube 37 umfassende Spannbereich 15 blockiert.

Gleichzeitig darf die Hülse 57 aber nicht zu lang bemessen werden, da anderenfalls am anderen Spannbereich 17 bereits die maximale Spannkraft erreicht ist, bevor am die Spannschraube 37 umfassenden Spannbereich 15 eine ausreichende Verspannung hergestellt ist.

Aus diesem Grund erfordert eine Anordnung mit Parallelschaltung gemäß Fig. 2 und Fig. 2a eine Abstimmung des Gesamtsystems, was z.B. durch Verändern der wirksamen Länge der Halteschraube 47 (Fig. 2) durch Verdrehen des Mutterelementes 49 erfolgen kann. Hierdurch ist eine Einstelleinrichtung 41 für die die Spannbereiche 15, 17 umfassende Spanneinrichtung realisiert.

### Bezugszeichenliste

- 11: Basiseinheit
- 13: Arbeitseinheit, Schwenksegment
- 15: Spannbereich
- 17: Spannbereich
- 19: Schwenkachse
- 21: Betätigungseinrichtung
- 22: Betätigungskraft
- 23: Übertragungseinrichtung
- 25: Spannorgan, Hebel bzw. Mutterelement
- 26: Spannkraft
- 27: Spannabschnitt
- 29: Angriffsabschnitt
- 31: Übertragungsabschnitt
- 32: Stellbewegung
- 33: Hebel, Spannorgan
- 35: Zwischenraum
- 37: Spannschraube
- 39: Stellorgan, Hebel
- 41: Einstelleinrichtung
- 43: Gewindeabschnitt
- 45: Draht, Zugdraht
- 46: Zugkraft
- 47: Halteschraube
- 48: Gegenkraft
- 49: Mutterelement
- 51: Lager
- 53: Schwenkbewegung
- 55: Kopplungseinrichtung
- 57: Hülse
- 59: Vorsprung

## Patentansprüche

1. Elektrische Bearbeitungsmaschine, insbesondere Handkreissäge, Stichsäge oder Oberfräse,
mit einer Basiseinheit (11), einer das Werkzeug umfassenden, relativ zur Basiseinheit (11) verschwenkbaren Arbeitseinheit (13), und einer Spanneinrichtung (15, 17), mit der die Arbeitseinheit (13) zur, insbesondere stufenlosen, Einstellung des Schwenkwinkels an der Basiseinheit (11) fixierbar ist und die wenigstens zwei längs der Schwenkachse (19) beabstandete Spannbereiche (15, 17) umfasst, an denen jeweils die Basiseinheit (11) und die Arbeitseinheit (13) miteinander verspannbar sind,
wobei die Spanneinrichtung eine gemeinsame Betätigungseinrichtung (21) für die Spannbereiche (15, 17) umfasst, mit der an den Spannbereichen (15, 17) jeweils eine Spannkraft (26) zum Verspannen von Basiseinheit (11) und Arbeitseinheit (13) erzeugbar ist,
**dadurch gekennzeichnet, dass**
der eine Spannbereich (15) vor der Arbeitseinheit (13) und der andere Spannbereich (17) hinter der Arbeitseinheit (13) angeordnet ist.

2. Bearbeitungsmaschine nach Anspruch 1,
**dadurch gekennzeichnet, dass**
der eine Spannbereich (15) im Bereich des vorderen Maschinenendes und der andere Spannbereich (17) im Bereich des hinteren Maschinenendes angeordnet ist.

3. Bearbeitungsmaschine nach Anspruch 1 oder 2,
**dadurch gekennzeichnet, dass**
mittels der Betätigungseinrichtung (21) die Verspannung zwischen Basiseinheit (11) und Arbeitseinheit (13) an beiden Spannbereichen (15, 17) gleichzeitig herstellbar und gleichzeitig lösbar ist.

4. Bearbeitungsmaschine nach einem der vorhergehenden Ansprüche,
**dadurch gekennzeichnet, dass**
eine die Spannbereiche (15, 17) miteinander verbindende Übertragungseinrichtung (23) vorgesehen ist, wobei die Betätigungseinrichtung (21) an dem einen Spannbereich (15) angeordnet ist und über die Übertragungseinrichtung (23) mit dem anderen Spannbereich (17) zusammenwirkt, wobei vorzugsweise der andere Spannbereich (17) als Spannorgan einen Hebel (33) umfasst, der an dem einen Hebelarm von der Übertragungseinrichtung (23) beaufschlagt ist und mit dem anderen Hebelarm die Spannkraft (26) aufbringt.

5. Bearbeitungsmaschine nach Anspruch 4,
**dadurch gekennzeichnet, dass**
an dem einen Spannbereich (15) mittels der Betätigungseinrichtung (21) zusätzlich zu der Spannkraft (26) eine Stellbewegung (32) erzeugbar ist, wobei vorzugsweise die Stellbewegung (32) an den anderen Spannbereich (17) übertragbar ist und dort die Spannkraft (26) erzeugt.

6. Bearbeitungsmaschine nach Anspruch 5,
**dadurch gekennzeichnet, dass**
der eine Spannbereich (15) ein, insbesondere als Hebel ausgebildetes, Spannorgan (25) umfasst, an dem die Betätigungseinrichtung (21) angreift, wobei eine von der Betätigungseinrichtung (21) auf das Spannorgan (25) aufgebrachte Betätigungskraft (22) und eine vom Spannorgan (25) auf die Arbeitseinheit (13) oder die Basiseinheit (11) aufgebrachte Spannkraft (26) entgegengesetzt gerichtet und parallel versetzt sind, und/oder der eine Spannbereich (15) ein, insbesondere als Hebel ausgebildetes, Spannorgan (25) umfasst, an dem die Betätigungseinrichtung (21) angreift und das sowohl die Spannkraft (26) aufbringt als auch die Stellbewegung (32) ausführt.

7. Bearbeitungsmaschine nach einem der vorhergehenden Ansprüche,
**dadurch gekennzeichnet, dass**
die beiden Spannbereiche (15, 17) bezüglich der Betätigungseinrichtung (21) in Reihe geschaltet sind.

8. Bearbeitungsmaschine nach einem der vorhergehenden Ansprüche,
**dadurch gekennzeichnet, dass**
die Spannbereiche (15, 17) hinsichtlich ihrer die Spannkraft (26) erzeugenden Komponenten zumindest im Wesentlichen baugleich ausgeführt sind und insbesondere baugleiche Spannorgane (25, 33) aufweisen, und/oder die Spannbereiche (15, 17) zum Aufbringen der Spannkraft (26) jeweils einen Hebel (25, 33) umfassen, wobei die Hebel (25, 33) derart ausgebildet und angeordnet sind, dass zu jedem Zeitpunkt an den Hebeln (25, 33) zumindest im Wesentlichen die gleichen Kraftverhältnisse herrschen.

9. Bearbeitungsmaschine nach einem der Ansprüche 6 bis 8,
**dadurch gekennzeichnet, dass**
ein Spannorgan (25) von lang gestreckter Form ist und sich vorzugsweise senkrecht zur, insbesondere parallel zur Schwenkachse (19) verlaufenden, Angriffsrichtung der Betätigungseinrichtung (21), erstreckt.

10. Bearbeitungsmaschine nach einem der Ansprüche 6 bis 9,
**dadurch gekennzeichnet, dass**
ein Spannorgan (25) einen Spannabschnitt (27) zum Aufbringen der Spannkraft (26) und einen mit der Übertragungseinrichtung (23) verbundenen Übertragungsabschnitt (31) zum Ausführen der Stellbewegung (32) umfasst, wobei ein Angriffsabschnitt (29) des Spannorgans (25), an dem die Betätigungseinrichtung (21) angreift, in Bezug auf eine Richtung senkrecht zur, insbesondere parallel zur Schwenkachse (19) verlaufenden, Angriffsrichtung der Betätigungseinrichtung (21) zwischen dem Spannabschnitt (27) und dem Übertragungsabschnitt (31) angeordnet ist, wobei vorzugsweise die Stellbewegung (32) des Übertragungsabschnitts (31) unter elastischer Verformung des Spannorgans (25) erfolgt.

11. Bearbeitungsmaschine nach einem der Ansprüche 6 bis 10,
**dadurch gekennzeichnet, dass**
ein Spannorgan (25) einen mit einer Spannschraube (37) zusammenwirkenden, insbesondere an einem separaten, drehfest angebrachten Mutterelement oder am Spannorgan (25) selbst ausgebildeten, Gewindeabschnitt (43) umfasst, wobei ein mit Abstand von der Mittelachse des Gewindeabschnitts (43) angeordneter Spannabschnitt (27) des Spannorgans (25) die Basiseinheit (11) oder die Arbeitseinheit (13) unmittelbar beaufschlagt.

12. Bearbeitungsmaschine nach einem der Ansprüche 10 bis 11,
**dadurch gekennzeichnet, dass**
der Spannabschnitt (27) des Spannorgans (25) die Basiseinheit (11) oder die Arbeitseinheit (13) unmittelbar beaufschlagt, während zwischen dem Angriffsabschnitt (29) des Spannorgans (25) und der Ba-siseinheit (11) bzw. der Arbeitseinheit (13) ein Zwischenraum (35) vorhanden ist.

13. Bearbeitungsmaschine nach einem der Ansprüche 1 bis 5,
**dadurch gekennzeichnet, dass**
die beiden Spannbereiche (15, 17) bezüglich der Betätigungseinrichtung (21) parallel geschaltet sind, wobei vorzugsweise der eine Spannbereich (15) ein, insbesondere als mit einer Spannschraube (37) verschraubtes Mutterelement ausgebildetes, Spannorgan (25) umfasst, an dem die Betätigungseinrichtung (21) angreift, wobei eine von der Betätigungseinrichtung (21) auf das Spannorgan (25) aufgebrachte Betätigungskraft (22) und eine vom Spannorgan (25) auf die Arbeitseinheit (13) oder die Basiseinheit (11) aufgebrachte Spannkraft (26) entgegengesetzt gerichtet sind und auf einer gemeinsamen Geraden liegen.

14. Bearbeitungsmaschine nach Anspruch 13,
**dadurch gekennzeichnet, dass**
der eine Spannbereich (15) ein Spannorgan (25) umfasst, an dem die Betätigungseinrichtung (21) angreift und das die Spannkraft (26) aufbringt, wobei eine Stellbewegung für den anderen Spannbereich (17) unter Umgehung des Spannorgans (25) von der Betätigungseinrichtung (21) und/oder von einer Relativbewegung zwischen Arbeitseinheit (13) und Basiseinheit (11) abgeleitet wird, wobei vorzugsweise der eine Spannbereich (15) zusätzlich zu dem Spannorgan (25) ein, insbesondere als Hebel ausgebildetes, Stellorgan (39) umfasst, das mit der Betätigungseinrichtung (21) zusammenwirkt und die Stellbewegung (32) ausführt.

15. Bearbeitungsmaschine nach einem der Ansprüche 4 bis 14,
**dadurch gekennzeichnet, dass**
eine Einstellvorrichtung (41) vorgesehen ist, mit der zumindest an einem Spannbereich (17) die Übertragungseinrichtung (23) einstellbar ist, und/oder dass zumindest ein Bestandteil (45) der Übertragungseinrichtung (23) lediglich zur Übertragung einer Zugkraft (46) ausgebildet ist, und/oder dass die Übertragungseinrichtung (23) eine, insbesondere dünne, Stange oder einen Draht (45) umfasst.

## Claims

1. An electric machine tool, in particular a hand-held circular saw, jig saw or router,
having a base unit (11), a work unit (13) comprising the tool and pivotable relative to the base unit (11) and a clamping device (15, 17) with which the work unit (13) can be fixed to the base unit (11) for the setting, in particular continuous setting, of the pivot angle and which comprises at least two clamping regions (15, 17) which are spaced apart along the pivot axis (19) and at which the base unit (11) and the work unit (13) can each be clamped to one another, wherein the clamping device comprises a common actuating device (21) for the clamping regions (15, 17) with which a respective clamping force (26) for clamping the base unit (11) and the work unit (13) can be generated at the clamping regions (15, 17),
**characterised in that**
the one clamping region (15) is arranged in front of the work unit (13) and the other clamping region (17) is arranged behind the work unit (13).

2. A machine tool in accordance with claim 1,
**characterised in that**
the one clamping region (15) is arranged in the region of the front machine end and the other clamping region (17) is arranged in the region of the rear machine end.

3. A machine tool in accordance with claim 1 or claim 2,
**characterised in that**
the tension between the base unit (11) and the work unit (13) can be established simultaneously and can be released simultaneously at both clamping regions (15, 17) by means of the actuating device (21).

4. A machine tool in accordance with any one of the preceding claims,
**characterised in that**
a transmission device (23) is provided which connects the clamping regions (15, 17) to one another, with the actuating device (21) being arranged at the one clamping region (15) and cooperating with the other clamping region (17) via the transmission device (23), with the other clamping region (17) preferably comprising a lever (33) as the clamping member which is acted on by the transmission device (23) at the one lever arm and which applies the clamping force (26) with the other lever arm.

5. A machine tool in accordance with claim 4,
**characterised in that**
an adjustment movement (32) can be generated in addition to the clamping force (26) at the one clamping region (15) by means of the actuating device (21), with the adjustment movement (32) preferably being able to be transmitted to the other clamping region (17) and generating the clamping force (26) there.

6. A machine tool in accordance with claim 5,
**characterised in that**
the one clamping region (15) comprises a clamping member (25) which is in particular configured as a lever and at which the actuating device (21) engages, with an actuating force (22) applied to the clamping member (25) by the actuating device (21) and a clamping force (26) applied to the work unit (13) or to the base unit (11) by the clamping member (25) being directed in opposite directions and being offset in parallel; and/or **in that** the one clamping region (15) comprises a clamping member (25) which is in particular configured as a lever, at which the actuating device (21) engages and which both applies the clamping force (26) and carries out the adjustment movement (32).

7. A machine tool in accordance with any one of the preceding claims,
**characterised in that**
the two clamping regions (15, 17) are connected in series with respect to the actuating device (21).

8. A machine tool in accordance with any one of the preceding claims,
**characterised in that**
the clamping regions (15, 17) have at least substantially the same construction with respect to their components generating the clamping force (26) and in particular have clamping members (25, 33) which are of the same construction; and/or **in that** the clamping regions (15, 17) each comprise a lever (25, 33) for applying the clamping force (26), with the levers (25, 33) being configured and arranged such that at least substantially the same force relationships apply at the levers (25, 33) at all times.

9. A machine tool in accordance with any one of the claims 6 to 8,
**characterised in that**
a clamping member (25) is of elongated shape and preferably extends perpendicular to the direction of engagement of the actuating device (21), said direction of engagement in particular extending parallel to the pivot axis (19).

10. A machine tool in accordance with any one of the claims 6 to 9,
**characterised in that**
a clamping member (25) comprises a clamping section (27) for applying the clamping force (26) and a transmission section (31) connected to the transmission device (23) for carrying out the adjustment movement (32), with an engagement section (29) of the clamping member (25) at which the actuating device (21) engages being arranged between the clamping section (27) and the transmission section (31) with respect to a direction perpendicular to the direction of engagement of the actuating device (21), said direction of engagement in particular extending parallel to the pivot axis (19), with the adjustment movement (32) of the transmission section (31) preferably taking place with an elastic deformation of the clamping member (25).

11. A machine tool in accordance with any one of the claims 6 to 10,
**characterised in that**
a clamping member (25) comprises a threaded section (43) which cooperates with a clamping screw (37) and is in particular formed at a separate, rotationally attached nut element or at the clamping member (25) itself, with a clamping section (27) of the clamping member (25) arranged at a spacing from the centre axis of the threaded section (43) directly acting on the base unit (11) or on the work unit (13).

12. A machine tool in accordance with one of the claims 10 to 11,
**characterised in that**
the clamping section (27) of the clamping member (25) acts directly on the base unit (11) or on the work unit (13), while an intermediate space (35) is present between the engagement section (29) of the clamping member (25) and the base unit (11).

13. A machine tool in accordance with any one of the claims 1 to 5,
**characterised in that**
the two clamping regions (15, 17) are connected in parallel with respect to the actuating device (21), with the one clamping region (15) preferably comprising a clamping member (25) which is in partiuclar configured as a nut element screwed to a clamping screw (37) and at which the actuating device (21) engages, with an actuating force (22) applied to the clamping member (25) by the actuating device (21) and a clamping force (26) applied to the work unit (13) or to the base unit (11) by the clamping member (25) being directed in opposite directions and lying on a common straight line.

14. A machine tool in accordance with claim 13,
**characterised in that**
the one clamping region (15) comprises a clamping member (25) at which the actuating device (21) engages and which applies the clamping force (26), with an adjustment movement for the other clamping region (17) being derived while bypassing the clamping member (25) from the actuating device (21) and/or from a relative movement between the work unit (13) and the base unit (11), with the one clamping region (25) comprising, in addition to the clamping member (25), a clamping member (39) which is in particular configured as a lever and which cooperates with the actuating device (21) and carries out the adjustment movement (32).

15. A machine tool in accordance with any one of the claims 4 to 14,
**characterised in that**
an adjustment device (41) is provided with which the transmission device (23) can be set at at least one clamping region (17); and/or **in that** at least one component (45) of the transmission device (23) is only configured for transmitting a tensile force (46); and/or **in that** the transmission device (23) comprises a bar, which is in particular thin, or a wire (45).

## Revendications

1. Machine d'usinage électrique, en particulier scie circulaire portative, scie sauteuse ou défonceuse,
comprenant une unité de base (11), une unité de travail (13) incluant l'outil et capable de basculer par rapport à l'unité de base (11), et un moyen de serrage (15, 17) au moyen duquel l'unité de travail (13) est susceptible d'être fixée sur l'unité de base (11) en vue d'un réglage, en particulier continu, de l'angle de basculement, et qui comporte au moins deux zones de serrage (15, 17) écartées le long de l'axe de basculement (19), au niveau desquelles l'unité de base (11) et l'unité de travail (13) sont respectivement susceptibles d'être calées l'une avec l'autre,
dans laquelle le moyen de serrage comprend un moyen d'actionnement commun (21) pour les zones de serrage (15, 17) à l'aide duquel une force de serrage respective (26) est susceptible d'être engendrée au niveau des zones de serrage (15, 17) pour caler l'unité de base (11) et l'unité de travail (13),
**caractérisée en ce que** l'une des zones de serrage (15) est agencée devant l'unité de travail (13) et l'autre zone de serrage (17) est agencée derrière l'unité de travail (13).

2. Machine d'usinage selon la revendication 1,
**caractérisée en ce que** l'une des zones de serrage (15) est agencée dans la région de l'extrémité avant de la machine et l'autre zone de serrage (17) et agencée dans la région de l'extrémité arrière de la machine.

3. Machine d'usinage selon la revendication 1 ou 2,
**caractérisée en ce que** le calage entre l'unité de base (11) et l'unité de travail (13) est susceptible d'être établi simultanément et annulé simultanément au niveau des deux zones de serrage (15, 17) au moyen du moyen d'actionnement (21).

4. Machine d'usinage selon l'une des revendications précédentes,
**caractérisée en ce qu'**il est prévu un système de transmission (23) qui relie l'une à l'autre les zones de serrage (15, 17), et le moyen d'actionnement (21) est agencé sur l'une des zones de serrage (15) et coopère avec l'autre zone de serrage (17) via le système de transmission (23), dans laquelle l'autre zone de serrage (17) comprend de préférence à titre d'organe de serrage un levier (33) qui est sollicité par le système de transmission (23) au niveau d'un bras de levier, et qui applique la force de serrage (26) avec l'autre bras de levier.

5. Machine d'usinage selon la revendication 4,
**caractérisée en ce que**, au niveau d'une des zones de serrage (15) il est possible d'engendrer au moyen du moyen d'actionnement (21) un mouvement de positionnement (32) en supplément à la force de serrage (26), dans laquelle le mouvement de positionnement (32) est de préférence susceptible d'être transmis à l'autre zone de serrage (17) et engendre au niveau de celle-ci la force de serrage (26).

6. Machine d'usinage selon la revendication 5,
**caractérisée en ce que** l'une des zones de serrage (15) comprend un organe de serrage (25), réalisé en particulier sous forme de levier, auquel attaque le moyen d'actionnement (21), dans laquelle une force d'actionnement (22) appliquée par le moyen d'actionnement (21) à l'organe de serrage (25) et une force de serrage (26) appliquée par l'organe de serrage (25) sur l'unité de travail (13) ou sur l'unité de base (11) sont orientées en sens opposé et décalées parallèlement, et/ou l'une des zones de serrage (15) comprend un organe de serrage (25), réalisé en particulier sous forme de levier, auquel attaque le moyen d'actionnement (21), et qui applique la force de serrage (26) tout comme il exécute le mouvement de positionnement (32).

7. Machine d'usinage selon l'une des revendications précédentes,
**caractérisée en ce que** les deux zones de serrage (15, 17) sont disposées en série par référence au moyen d'actionnement (21).

8. Machine d'usinage selon l'une des revendications précédentes,
**caractérisée en ce que** les zones de serrage (15, 17) sont réalisées, pour ce qui concerne leurs composantes engendrant la force de serrage (26), au moins essentiellement avec des structures identiques et comportent en particulier des organes de serrage (25, 33) de structure identique, et/ou **en ce que** les zones de serrage (15, 17) destinées à appliquer la force de serrage (26) comprennent respectivement un levier (25, 33), et les leviers (25, 33) sont réalisés et agencés de telle façon qu'à tout instant il règne au niveau des leviers (25, 33) au moins essentiellement les mêmes relations de force.

9. Machine d'usinage selon l'une des revendications 6 à 10,
**caractérisée en ce qu'**un organe de serrage (25) a une forme étirée en longueur, et s'étend de préférence perpendiculairement à la direction d'attaque, en particulier parallèle à l'axe de basculement (19), du moyen d'actionnement (21).

10. Machine d'usinage selon l'une des revendications 6 à 10,
**caractérisée en ce qu'**un organe de serrage (25) comprend un tronçon de serrage (27) pour appliquer la force de serrage (26) et un tronçon de transmission (31), relié au système de transmission (23) pour exécuter le mouvement de positionnement (32), dans laquelle un tronçon d'attaque (29) de l'organe de serrage (25), sur lequel attaque le moyen d'actionnement (21), est agencé, par référence à une direction perpendiculaire à la direction d'attaque, s'étendant en particulier parallèlement à l'axe de basculement (19), du moyen d'actionnement (21), entre le tronçon de serrage (27) et le tronçon de transmission (31), et dans laquelle le mouvement de positionnement (32) du tronçon de transmission (31) se produit de préférence avec déformation élastique de l'organe de serrage (25).

11. Machine d'usinage selon l'une des revendications 6 à 10,
**caractérisée en ce qu'**un organe de serrage (26) comprend un tronçon à pas de vis (43) coopérant avec une vis de serrage (37) et réalisé en particulier soit sur un élément en écrou séparé monté solidairement en rotation, soit sur l'organe de serrage (25) lui-même, et dans laquelle un tronçon de serrage (27), agencé à distance de l'axe médian du tronçon à pas de vis (43), de l'organe de serrage (25) sollicite directement l'unité de base (11) ou l'unité de travail (13).

12. Machine d'usinage selon l'une des revendications 10 et 11,
**caractérisée en ce que** le tronçon de serrage (27) de l'organe de serrage (25) sollicite directement l'unité de base (11) ou l'unité de travail (13) tandis qu'il est prévu un intervalle (35) entre le tronçon d'attaque (29) de l'organe de serrage (25) et l'unité de base (11) ou l'unité de travail (13).

13. Machine d'usinage selon l'une des revendications 1 à 5,
**caractérisée en ce que** les deux zones de serrage (15, 17) sont montées en parallèle vis-à-vis du moyen d'actionnement (21), dans laquelle l'une des zones de serrage (15) comprend de préférence un organe de serrage (25), réalisé en particulier sous forme d'élément en écrou vissé sur une vis de serrage (37), organe de serrage (25) qui est attaqué par le moyen d'actionnement (21), et dans laquelle une force d'actionnement (22) appliquée par le moyen d'actionnement (21) sur l'organe de serrage (25), et une force de serrage (26) appliquée par l'organe de serrage (25) sur l'unité de travail (13) ou sur l'unité de base (11) sont orientées en sens opposé et sont situées sur une droite commune.

14. Machine d'usinage selon la revendication 13,
**caractérisée en ce que** l'une des zones de serrage (15) comprend un organe de serrage (25) auquel attaque le moyen d'actionnement (21) et qui applique la force de serrage (26), dans laquelle un mouvement de positionnement pour l'autre zone de serrage (17) est dérivé, en contournant l'organe de serrage (25), depuis le moyen d'actionnement (21) et/ou depuis un mouvement relatif entre l'unité de travail (13) et l'unité de base (11), et l'une des zones de serrage (15) comporte de préférence, en supplément à l'organe de serrage (25), un organe de positionnement (39) réalisé de préférence sous forme de levier, qui coopère avec le moyen d'actionnement (21) et qui exécute le mouvement de positionnement (32).

15. Machine d'usinage selon l'une des revendications 4 à 14,
**caractérisée en ce qu'**il est prévu un dispositif de réglage (41) au moyen duquel le système de transmission (23) est réglable au moins au niveau d'une zone de serrage (17), et/ou **en ce qu'**au moins un élément constitutif (45) du système de transmission (23) est réalisé uniquement pour la transmission d'une force de traction (46), et/ou **en ce que** le système de transmission (23) comprend une barre, en particulier mince, ou un fil métallique (45).
